# EUROPEAN PATENT APPLICATION

(11) **EP 1 892 940 A1**
(43) Date of publication of application: **27.02.2008**
(21) Application number: 06447097.4
(22) Date of filing: 23.08.2006
(51) Int. Cl.: H04M 7/00, H04L 29/06

(54) **Device and method for enabling SIP DECT terminal mobility**

(71) Applicant: Thomson Telecom Belgium, 2650 Edegem (BE)
(72) Inventor: Dekeyser, Miek, 2840 Rumst (BE); Gyselinck, Luc, 9100 Sint Niklaas (BE)
(74) Representative: Kohrs, Martin

(57) **Abstract**

The present invention concerns a networking device (1) comprising a first interface to a first network (10) and a second interface to a second network (20). The device comprises connecting means (3) for associating to a terminal (11) located on the first network and storing a unique and permanent identifier of the terminal, means (9) for registering with an address comprising the terminal identifier to a server located on the second network for using a service, and means (7) for enabling the terminal to use the service on the address.

## Description

The present invention relates to a device and method for enabling SIP DECT terminal mobility.

Many applications on the internet require the creation and management of a session, where a session is an exchange of data between an association of participants. The session initiation protocol, noted SIP, is defined in the request for comments standard number RFC3261 from the Internet Engineering Task Force, IETF. SIP is an application-layer control protocol for creating, modifying, and terminating sessions with one or more participants. These sessions include Internet telephone calls, multimedia distribution, and multimedia conferences. SIP invitations are used to create sessions and carry session descriptions that allow participants to agree on a set of compatible media types.
SIP enables Internet endpoints, also called user agents, and noted SIP UA, to discover one another and to agree on a characterization of a session they would like to share. For locating prospective session participants, and for other functions, SIP enables the creation of an infrastructure of network hosts, called proxy servers, to which user agents can send registrations, invitations to sessions, and other requests. Proxy servers help route requests to the user's current location, authenticate and authorize users for services, implement provider call-routing policies, and provide features to users. SIP can also invite participants to existing sessions, such as multicast conferences. Media can be added to, and removed from, an existing session. SIP supports name mapping and redirection services, which supports personal mobility. Users can maintain a single visible identifier regardless of their network location. SIP supports means for establishing and terminating multimedia communications, comprising user location, user availability, user capabilities, session setup and session management. SIP does not provide any services. SIP provides primitives that can be used to implement different services. A SIP UA is a logical entity that can act as a user agent client or user agent server. As a client, it creates a new SIP request. As a server it generates a response to the request. The role of a client or a server lasts only during a transaction between a client and a server.
Digital Enhanced Cordless Telecommunications family of standard, noted DECT, defines the DECT terminal, also called the DECT handset, and the DECT base station. Hereafter a SIP DECT base station refers to a device that embeds a DECT base station and allows a DECT terminal associated to this base station to access the voice over IP services managed by the SIP. It can be a standalone device or comprised in a Digital Subscriber Line customer premise equipment, noted DSL CPE. A CPE that comprises a SIP DECT base station comprises several SIP user agents representing one or all DECT terminals. Generally the end user enters the SIP address, which is the SIP Uniform Resource Indicator, noted SIP URI, and maps it to the DECT terminal. The CPE keeps a mapping table from DECT terminals to the pre-configured SIP URIs. The DECT terminal may then only be used with the DECT base station with the pre-configured SIP URI. If the DECT terminal is used with another DECT base station, the base station has to be re-configured to authorize the DECT terminal to access VolP services. A DECT terminal can not easily roam between several base stations using the same SIP URI.

The present invention concerns a networking device comprising a first interface to a first network and a second interface to a second network. According to the invention, the device comprises connecting means for associating to a terminal located on the first network and storing a unique and permanent identifier of the terminal, means for registering with an address comprising the terminal identifier to a server located on the second network for using a service, and means for enabling the terminal to use the service on the address.
The networking device permits to automatically connect to a terminal on a first network and enables the terminal to access services on a second network. The registration to the service comprises the creation of an address that is dependant on the terminal identifier. The registration to the service is not performed before the terminal is associated. When the terminal roams from a first networking device to a second networking device, the same address is used in each networking device for the registration to the server. The terminal can then be identified by a remote terminal on the network using the same service.

According to an embodiment of the invention, the device comprises filtering means for defining a set of authorized terminals whose identifiers are registered.
This permits to select the terminals that can automatically access the service on the second network.

According to an embodiment of the invention, the filtering means registers only a terminal comprised in the set of authorized terminals.
The device allows only a terminal of the list to access the service.

Preferably the filtering means identifies an authorized terminal either with a terminal identifier or with the fact that the terminal has been associated during a pre-defined time period.

According to an embodiment of the invention, the service is a phone service.

According to an embodiment of the invention, the phone service conforms to the session initiation protocol, the server is a registrar and the address is a session initiation protocol uniform resource indicator.

According to an embodiment of the invention, the first network is a digital enhanced cordless telecommunications network.

According to an embodiment of the invention, the session initiation protocol uniform resource indicator comprises the terminal international portable user identity.

Another object of the invention is a method in a device comprising a first interface to a first network and a second interface to a second network. The method comprises at the level of the device the steps of associating a terminal located on the first network, the terminal comprising a unique and permanent identifier, registering with an address comprising the terminal identifier to a server on the second network in order to participate to a service, and enabling the terminal to use the service on the address.

According to an embodiment of the invention, the method comprises the step of setting a list of authorized terminals with a user interface, and registering only if the terminal is comprised in the list.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

The invention will be better understood and illustrated by means of the following embodiment and execution examples, in no way limitative, with reference to the appended figures on which:
- Figure 1 is a block diagram of the various elements of the embodiment;
- Figure 2 is a block diagram of an object compliant with the embodiment; and
- Figure 3 is a flow diagram of the registration method of the embodiment.

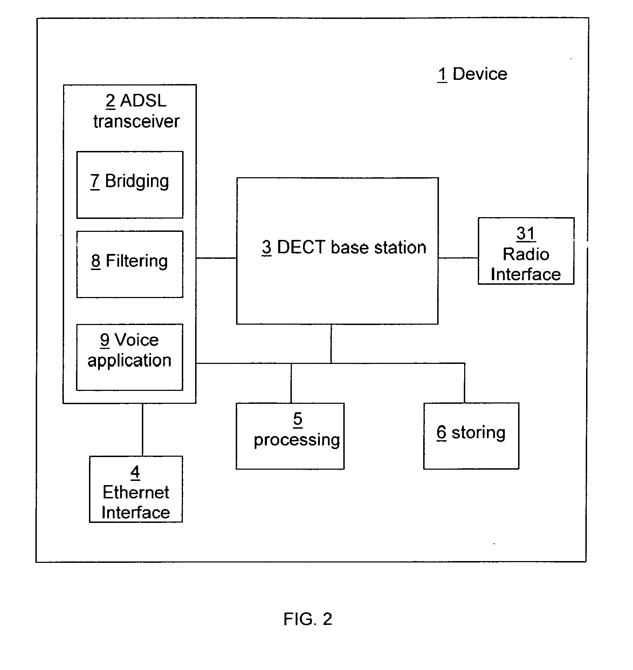

In Figure 2, the represented blocks are purely functional entities, which do not necessarily correspond to physical separated entities. Namely, they could be developed in the form of software, or be implemented in one or several integrated circuits.
The exemplary embodiment comes within the framework of SIP and DECT, but it is not limited to this particular environment and may be applied within other frameworks where a terminal on a network accesses a service on another network.

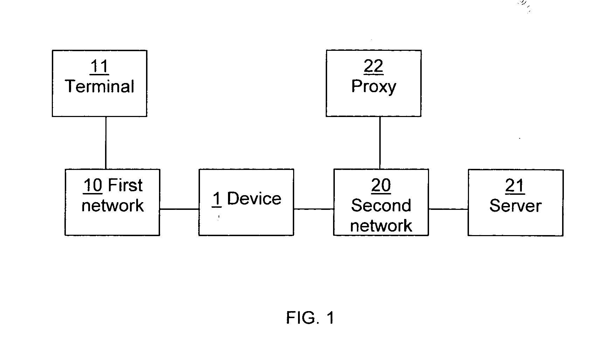

The figure 1 represents the device 1 of the embodiment that is a customer premise equipment, noted CPE, that is also referred to a gateway hereafter. The CPE comprises an interface to a first network, which is a DECT network. The first network comprises at least a DECT terminal 11 that associated to a DECT base station comprised in the CPE. Of course the first network might be another type of local network, wired or wireless, with devices that supports voice services. The CPE comprises an interface to a second network 20, which is a network that provides voice-over-IP services, noted VolP services. The second network is an Internet network. The second network comprises a device 21 that is a SIP server. This is a server that enables SIP clients located in the CPE to register in order to participate to the VolP services. It is also called a registrar. The CPE is also called a residential gateway. The proxy 22 routes the SIP messages in the network.

The figure 2 represents the principal elements of the gateway 1 according to the embodiment. The gateway comprises an asymmetric digital subscriber line transceiver 2, noted ADSL transceiver, which provides an access to the ADSL network, further providing access to the Internet. The transceiver accesses the DSL network through an Ethernet interface 4 in a technique well known per se.

The gateway comprises a DECT base station 3, comprising a DECT baseband module and a DECT radio frequency module. The DECT base station 3 is connected to a radio interface 31 that offers the access to a DECT radio frequency. This permits to connect to DECT terminals to the gateway. The DECT base station comprises means for detecting a new DECT terminal and registering the new DECT terminal to the CPE.
The gateway also comprises voice application means 9 for managing voice services with the SIP. The voice application means manages the SIP user agents. The voice application means of the gateway comprises means for managing several SIP user agents. It also comprises means for providing voice related services such as among others dial plan management, statistics, call control. The voice application creates a SIP UA profile per authorized terminal. The voice application also comprises means for building the address with the terminal identifier in the URI, as defined below. The voice application means also comprises a mapping table that matches the URIs to the corresponding terminals. The voice module registers each authorized terminal to the registrar according to the SIP standard.
The user agent corresponding to the terminal is comprised in the CPE. It is not comprised in the terminal. The CPE first of all is a SIP UA representing the DECT terminal. Additionally, it is possible the CPE also comprises a Proxy or Back-To-Back User Agent logic, noted B2BUA. It offers indirect access to the terminal to the VolP network, using SIP to setup the VolP service.
The gateway comprises filtering means 8 for filtering the DECT terminals that are allowed to access the VolP services, i.e. for which the gateway use the SIP, as describe in more details below. The filtering module applies filtering rules for deciding whether the DECT terminal is to be considered for the VolP service. The filtering module is adapted for selecting and allowing some DECT terminals to get a SIP URI and to access VolP services. The different possibilities offered for filtering are:
- The method does not apply for any registered DECT terminal.
- The method applies for all registered DECT terminal.
- The method applies for some terminals only. The criterion for selection is based on the IPUI, which is defined hereafter. A list of IPUI numbers is entered in the CPE, and only the terminals with an IPUI in the list may get a SIP URI. Any other criteria for selection are applicable in order to define a list of authorized terminals. In a variant embodiment, a period of time might be defined during when the terminals that register to the CPE have access to the SIP.
   The CPE comprises a user interface that permits to configure the filtering rules either locally by the end user, or remotely by the service provider. This permits to configure a set of CPEs so that a terminal can roam between the CPEs.
   The transceiver interfaces to the DECT base station module. It comprises also a bridging module 7 for bridging a VolP communication between a device located on the Internet and a DECT terminal. This comprises the VolP communication switching and transcoding.
   The bridging module, the filtering module and the voice application module are comprised in the ADSL transceiver. In a variant embodiment they could be implemented in modules not comprised in the ADSL transceiver.
   The gateway comprises processing means 5 for processing the modules of the gateway and storing means 6 for storing data managed by the gateway.

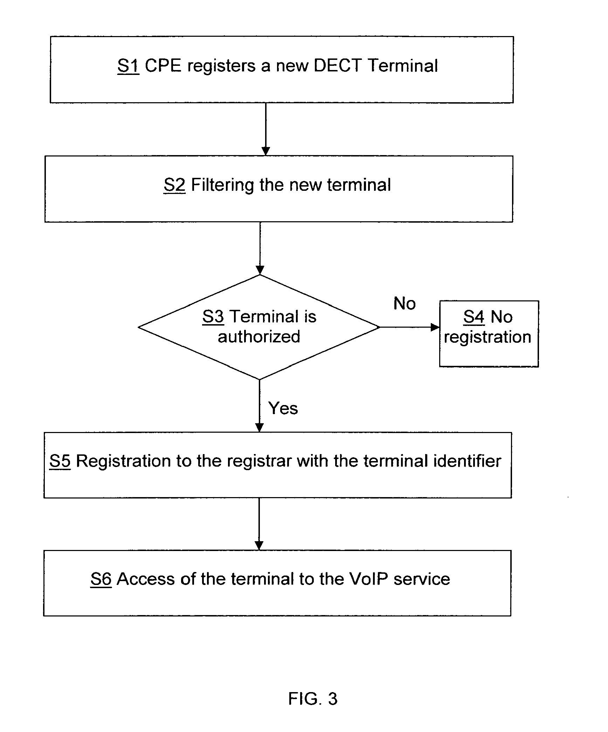

The process for enabling the DECT terminal to access the VolP services is described in the figure 3.
S1. The DECT base station detects a new DECT terminal, and registers the DECT terminal. The DECT base station gets among other the terminal identifier.
S2. The DECT base station informs the voice application module of the new DECT terminal. When informed of a new DECT terminal, the CPE verifies the authorization of the DECT terminal with the filtering means (S3). If the terminal is not authorized, the registration is not performed (S4). If the terminal is authorized, the voice application dynamically performs the registration with the registrar using the SIP (S5). It registers with an address, the SIP Uniform Resource Indicator, noted URI, comprising the identifier of the terminal; the registration permits to bind the SIP URI with the CPE address at which this SIP URI is reachable.
S6. The DECT terminal is finally the terminal that uses the VolP service at that address. The gateway comprises a table to match the SIP URI to the DECT terminal identifier. The DECT terminal does not use the SIP URI, but uses the DECT terminal address as the source address in the first network when sending a packet with the VolP service. The CPE then translates the DECT source address to the SIP URI and sends the packet on the second network.

The process for enabling the DECT terminal to access the VolP services does not require the involvement of a user on the gateway. It is done automatically upon the detection of the DECT terminal in the first network.
When roaming the DECT terminal might be registered twice to the registrar. According to the SIP RFC, the first registration expires after a while if no registration is done to refresh the registration binding between the SIP RI and the first CPE.

The addressing scheme of the embodiment uses the SIP URI that is defined in the RFC3261 and follows the general syntax of the URI defined in the RFC2396. The SIP URI identifies a communication resource, for example an end-user of an online service. It contains enough information to initiate and maintain a communication session with the resource. Generally, SIP URI can be summarized as having the form of an email address, for example login@domain.net, where the login may have the form of a name of the end user or the form of a telephone number. Examples of SIP URI are then: alice@domain.net or 0401125253@domain.net. In general, the SIP URI's are configured in the CPE either manually by the end-user, or remotely configured by a remote management system using the TR69. A same CPE always registers to the registrar with the same SIP URI(s). So traditionally the same URI always corresponds to the same CPE's. The CPE is configured in order to map one or more URI to one or more DECT terminal. The CPE keeps a mapping table from DECT terminal identifier to SIP account information such as SIP URI, username, password, outbound proxy and registrar.
The International Portable User Identity (noted IPUI) is defined in the ETSl document EN 300 175-6 V1.9.0 (2005-04), digital enhanced cordless telecommunications (DECT); common interface; part 6: identity and addressing. The IPUI is used to identify the DECT portable and is assigned by the manufacturer. The IPUI may be locally or globally unique. According to the embodiment, the IPUI of the terminal is globally unique and corresponds to the portable user identity type N, meaning the residential/default type. It comprises an international portable equipment identity (noted IPEI) that is embedded in the device by the manufacturer of the device. The identifier is permanent and unique. According to the embodiment, the SIP DECT base station uses the Identifier of the DECT terminal IPUI in the account information and the registration happens with account information. The IPUI is used as part of the SIP URI (e.g. IPUI@dect.domain.net or IPUI@IPUldomain.net). With the IPUI used in the URI, a CPE registers with a different SIP URI depending on what is the DECT terminal behind the CPE. There is not anymore a fixed relationship from SIP URI to CPE. The registration is plug_and_play. There is no need to configure in all CPEs the identifiers of all the DECT terminals that have to be supported. This does not require any change in the DECT terminal and in the registrar.
In the embodiment, at initialization, the CPE does not register the SIP URI's to the registrar. It waits for the connection of DECT terminals to process the registration with a SIP URI related to the DECT terminal. This is different from the usual configuration of a CPE, where the SIP URI's are configured prior to the connection of a DECT terminal to the CPE.

## Claims

1. Networking device (1) comprising a first interface to a first network (10) and a second interface to a second network (20), **characterized in that** it comprises:
- connecting means (3) for associating to a terminal (11) located on the first network and storing a unique and permanent identifier of said terminal,
- means (9) for registering with an address comprising the terminal identifier to a server located on the second network for using a service, and
- means (7) for enabling said terminal to use said service on said address.

2. Device according to claim 2, **characterized in that** it comprises filtering means (8) for defining a set of authorized terminals whose identifiers are registered.

3. Device according to claim 3, **characterized in that** the filtering means (8) registers only a terminal comprised in the set of authorized terminals.

4. Device according to claim 2 or 3, **characterized in that** the filtering means identifies an authorized terminal either with a terminal identifier or with the fact that the terminal has been associated during a pre-defined time period.

5. Device according to any of the preceding claims **characterized in that** the service is a phone service.

6. Device according to claim 5, **characterized in that** the phone service conforms to the session initiation protocol and the address is a session initiation protocol uniform resource indicator.

7. Device according to any of the preceding claims **characterized in that** the first network is a digital enhanced cordless telecommunications network.

8. Device according to claim 7 **characterized in that** the session initiation protocol uniform resource indicator comprises the terminal international portable user identity.

9. Method in a device (1) comprising a first interface to a first network (10) and a second interface to a second network (20), comprising at the level of the device the steps of:
- associating a terminal (11) located on the first network, said terminal comprising a unique and permanent identifier,
- registering with an address comprising said terminal identifier to a server (21) on the second network in order to participate to a service, and
- enabling said terminal to use said service on said address.

10. Method according to the claim 9, **characterized in that** it comprises the step of setting a list of authorized terminals with a user interface, and registering only if the terminal is comprised in the list.
